Europäisches Patentamt

(19) European Patent Office

Office européen des brevets

(11) Veröffentlichungsnummer: **0 032 389**

**A2**

(12) # EUROPÄISCHE PATENTANMELDUNG

(21) Anmeldenummer: 81100113.0

(22) Anmeldetag: 09.01.81

(51) Int. Cl.³: **E 03 C 1/04**
**F 16 L 45/00**

(30) Priorität: 12.01.80 DE 3001043

(43) Veröffentlichungstag der Anmeldung:
22.07.81 Patentblatt 81/29

(84) Benannte Vertragsstaaten:
AT BE CH DE FR IT LI LU NL

(71) Anmelder: Joh.A. Benckiser Wassertechnik GmbH
Postfach 8
D-6905 Schriesheim(DE)

(72) Erfinder: Johannknecht, Alfred, Dr.
Ruhweg 6
D-6905 Schriesheim(DE)

(72) Erfinder: Baumgartner, Werner
Husarenstrasse 20
D-6900 Heidelberg(DE)

(72) Erfinder: Uebelherr, Werner
Berliner Strasse 10
D-6944 Hemsbach(DE)

(74) Vertreter: Patentanwälte Zellentin
Zweibrückenstrasse 15
D-8000 München 2(DE)

(54) Anschlussblock für Wasserleitungen.

(57) Die Erfindung betrifft einen Anschlußblock (1) für Wasserleitungen zum sofortigen oder späteren Herstellen von Anschlüssen, z.B. an Filter, an Dosierpumpen, zum Einbringen von Enthärtern, Korrosionsschutzmitteln oder dergleichen und an andere Zusatzgeräte zur Behandlung des Wassers usw., der aus einem in die Wasserleitung einsetzbaren Rohrabschnitt mit seitlichem Flansch (4) und darin angeordneten getrennten Mündungen (7) der anschließenden Leitungsabschnitte besteht. Erfindungsgemäß sind die Leitungsabschnitte als Kanäle (3) bogenförmig herausgeführt und in Strömungsrichtung hintereinander angeordnet und weisen über ihre Länge eine gleichgroße Querschnittsfläche auf. Die Mündungen (7) der Kanäle (3) sind etwa halbkreisförmig und ergänzen einander zu einem durch eine Trennwand (5) getrennten Kreis. Der Anschlußblock (1) wird mit einem Auschlußstück (10, 11, 13, 15, 19, 24) verbunden, das als halbkugelförmige Abdeckkappe (10), als Anschlußkappe (13) mit einem Anschlußstutzen (14), als Kappe (19, 24) mit einer im Bereich der Trennwand (5) ausgeführten Querschnittsverengung (20) und beiderseits der Verengung (20) ausgeführten Durchgängen (21, 25, 26), deren Ausgangsmündungen in Strömungsrichtung hintereinander oder konzentrisch angeordnet sind, als Anschlußstück (11) mit zwei Anschlußstutzen (12) oder als Anschlußstück (15) mit konzentrischen Ausgangsmündungen ausgeführt sein kann.

*Fig. 3*

PATENTANWÄLTE
ZELLENTIN
ZWEIBRÜCKENSTR. 15
8000 MÜNCHEN 2

Joh.A. Benckiser Wassertechnik GmbH.   9. Januar 1981
6905 Schriesheim                       RZ/Hu
                                       Eu 8029

Anschlußblock für Wasserleitungen
─────────────────────────────────

Die Erfindung betrifft einen Anschlußblock für Wasserleitungen, zum Herstellen von Anschlüssen, bestehend aus
einem in die Leitung einsetzbaren Rohrabschnitt mit seitlichem Flansch und darin angeordneten getrennten Mündungen der anschließenden Leitungsabschnitte.

Ein solcher Anschlußblock ist auf dem Markt. Er wird in
eine Wasserleitung eingebaut und hat am Flansch konzentrische Ausgänge für den Anschluß einer Dosierpumpe zum
Einbringen von Enthärtern, Korrosionsschutzmitteln oder
dergleichen. Bei der Rohrmontage kann der Flansch durch
eine Montagekappe abgedeckt werden, so daß eine provisorische Benutzung der Leitung oder deren Überprüfung vor
Anschluß der Dosierpumpe oder bei deren Reparatur möglich ist.

Die Abdeckung mit einer Montagekappe stellt lediglich
einen Notbehelf dar, da wegen der konzentrischen Ausgänge
im Flansch mit einer starken Verwirbelung und dadurch
mit einem erheblichen Druckabfall gerechnet werden muß.
Die Anordnung mehrerer Anschlußblöcke in einer Leitung
zum Anschluß weiterer Geräte, z.B. eines Filters, Wasserenthärters und dergleichen, ist aus diesem Grunde nicht
ratsam, aber auch deswegen, weil solche Geräte vielfach
einen andersartigen Anschlußflansch erfordern.

Aufgabe der Erfindung ist die Schaffung eines Anschluß-
Blocks für Wasserleitungen, durch den die Verwirbelung
herabgesetzt wird und mit dessen Hilfe Anschlüsse verschiedener Art hergestellt werden können.

Erfindungsgemäß wird das dadurch erreicht, daß die Leitungsabschnitte als Kanäle bogenförmig herausgeführt
und in Strömungsrichtung hintereinander angeordnet sind
und über ihre Länge eine gleichgroße Querschnittsfläche
aufweisen.
Vorzugsweise sind die Mündungen der Kanäle etwa halbkreisförmig und ergänzen einander zu einem durch eine
Trennwand getrennten Kreis.

In weiterer Ausbildung der Erfindung wird vorgeschlagen,
den Anschlußblock mit einem Anschlußstück zu verbinden.

Das Anschlußstück kann eine Abdeckkappe sein, die vorzugsweise halbkugelförmig ausgebildet ist.

Nach einer anderen Ausführungsform ist das Anschlußstück
als Anschlußkappe mit einem Anschlußstutzen ausgebildet,
wodurch der Anschluß einer Abzweigleitung möglich ist.

Nach einer weiteren Ausführungsform weist das Anschlußstück zwei Anschlußstutzen auf, deren Eingänge gegenüber
den Mündungen der Kanäle des Anschlußblocks angeordnet
sind. Diese Ausführungsform ist für den Anschluß eines
Wasseraufbereitungsgeräts mit Hilfe von Verbindungsschläuchen geeignet.

Nach einer weiteren Ausführungsform weist das Anschlußstück konzentrische Ausgangsmündungen auf, so daß sich
eine Anschlußmöglichkeit für Geräte sowohl bei senkrechter als auch bei waagerechter Lage der Rohrleitung ergibt.

0032389

Das Anschlußstück kann ferner als Kappe ausgebildet sein und im Bereich der Trennwand der Mündungen des Anschlußblocks eine Querschnittsverengung und beiderseits der Querschnittsverengung Durchgänge für einen Nebenschluß aufweisen. Dabei können die Ausgangsmündungen der Durchgänge in Strömungsrichtung hintereinander angeordnet oder konzentrisch ausgebildet sein. Bei einer solchen Ausführung des Anschlußstücks wird eine Anschlußmöglichkeit für eine im Nebenstrom angeordnete Dosiervorrichtung mit hintereinander liegenden oder konzentrischen Anschlußkanälen geschaffen.

Die Erfindung wird anhand von Ausführungsbeispielen unter Bezug auf Zeichnungen näher erläutert. Es zeigt:

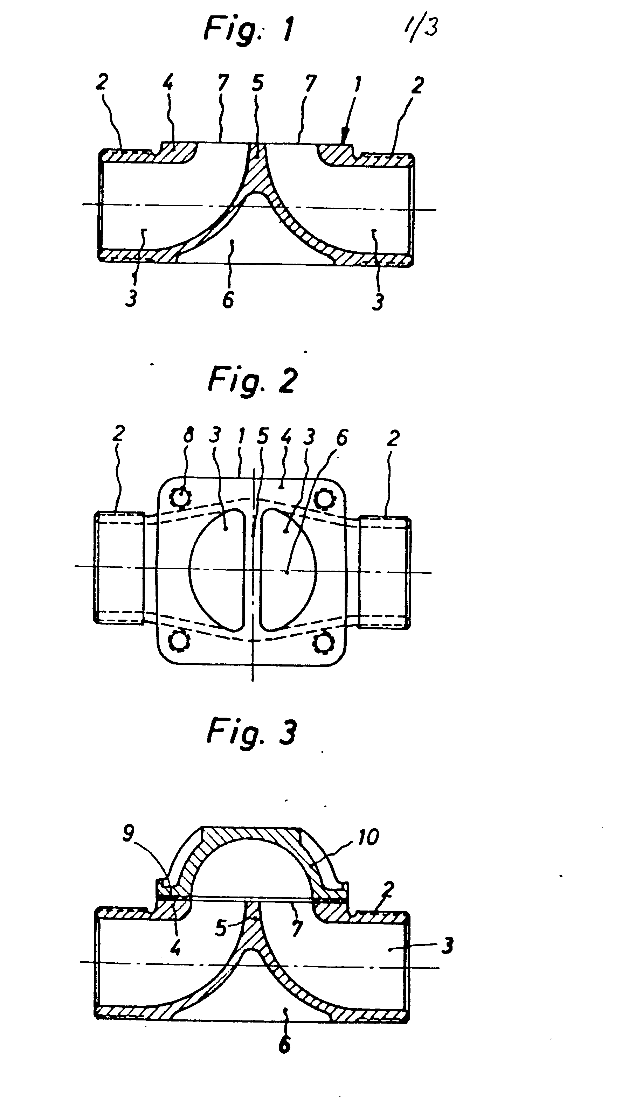

Fig. 1    einen Längsschnitt durch einen erfindungsgemäßen Anschlußblock,

Fig. 2    die Draufsicht auf den Anschlußblock gemäß Fig.1,

Fig. 3    den Anschlußblock gemäß Fig. 1 mit aufgesetzter Abdeckkappe,

Fig. 4    die Draufsicht auf die Abdeckkappe gemäß Fig. 3,

Fig. 5    ein Anschlußstück mit zwei Anschlußstutzen,

Fig. 6    ein Anschlußstück in Form einer Kappe mit einem Anschlußstutzen,

Fig. 7    ein Anschlußstück mit zwei konzentrischen Ausgangsmündungen,

Fig. 8    ein Anschlußstück in Form einer Kappe mit Querschnittsverengung und nebeneinander angeordneten Ausgängen,

Fig. 9 ein Anschlußstück gemäß Fig. 8, jedoch mit konzentrischen Ausgangsmündungen.

Der Anschlußblock 1 ist rohrförmig, mit endseitigen Anschlußgewinden 2 ausgebildet, wobei die anschließenden Leitungsabschnitt in bogenförmigen Kanälen 3 weitergeführt sind, die im Flansch 4 münden. Die in der Mitte des Anschlußblocks aneinanderstoßenden Kanalwände bilden hier eine bis zur Flanschebene reichende Wand 5. Zur Versteifung der Konstruktion ist außen zwischen den Krümmungen der Kanäle 3 eine Stegplatte 6 angeordnet. Der rohrartige Teil des Anschlußblocks 1 ist in der Mitte verbreitert, so daß die etwa halbkreisförmigen Mündungen 7 der Kanäle 3, die sich etwa zu einem Kreis ergänzen, die gleiche Querschnittsfläche haben können, wie der Querschnitt der Kanäle 3. Der Flansch 4 weist vorzugsweise in einem Quadrat angeordnete Gewindebohrungen 8 auf.

Auf den Flansch 4 kann unter Zwischenlegung eine Dichtung 9 ein Anschlußstück, beispielsweise eine Abdeckkappe 10 aufgesetzt und mit dem Flansch 4 verschraubt werden. Im Falle der Benutzung einer solchen Abdeckkappe 10 ergibt sich in der Leitung lediglich eine Schlaufe, d.h. die Abdeckkappe 10 dient zur Strömungsumlenkung. Durch die Bogenführung der Kanäle 3 und die konstant gehaltene Querschnittsfläche ergibt sich eine ruhige Wasserführung mit einem äußerst geringen Druckabfall, insbesondere dann, wenn die Abdeckkappe 10 - wie bevorzugt - etwa halbkugelförmig ausgebildet ist.

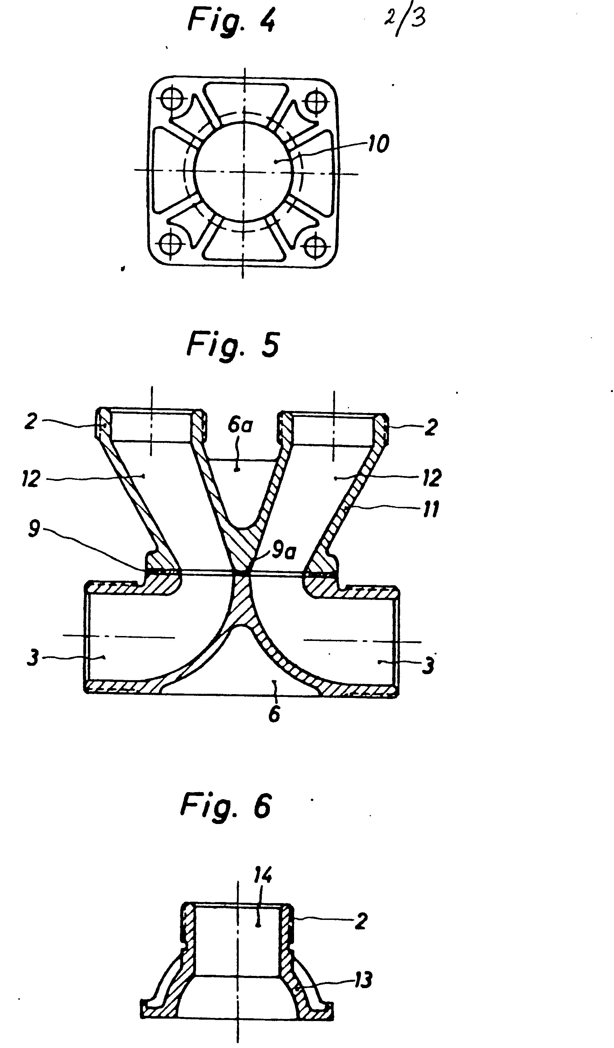

Auf dem Flansch 4 kann auch ein Anschlußstück 11 (Fig.5) mit zwei Anschlußstutzen 12 in entsprechender Weise angeschlossen werden. Die Dichtung 9 weist in diesem Falle einen mittleren Steg 9a auf. Die Anschlußstutzen 12 bilden eine Fortsetzung der Kanäle 3, sind auseinandergeführt und an den Enden so abgewinkelt, daß sie parallel liegen. Die Enden weisen Anschlußgewinde 2 auf. Ein Steg 6a dient der Versteifung des Anschlußstücks 11 zwischen den Anschlußstutzen 12. An die Anschlußstutzen 12 können z.B. Verbindungsschläuche angesetzt werden, die zu einem Dosiergerät führen.

Ein Anschlußstück kann als Anschlußkappe 13 (Fig. 6) ausgebildet sein, diese weist jedoch im Gegensatz zur Abdeckkappe 10 an der Spitze einen Anschlußstutzen 14 mit einem äußeren Anschlußgewinde 2 auf. Hier läßt sich eine Zweigleitung zur Entnahme von Brauchwasser oder zu anderen Zwecken anschließen.

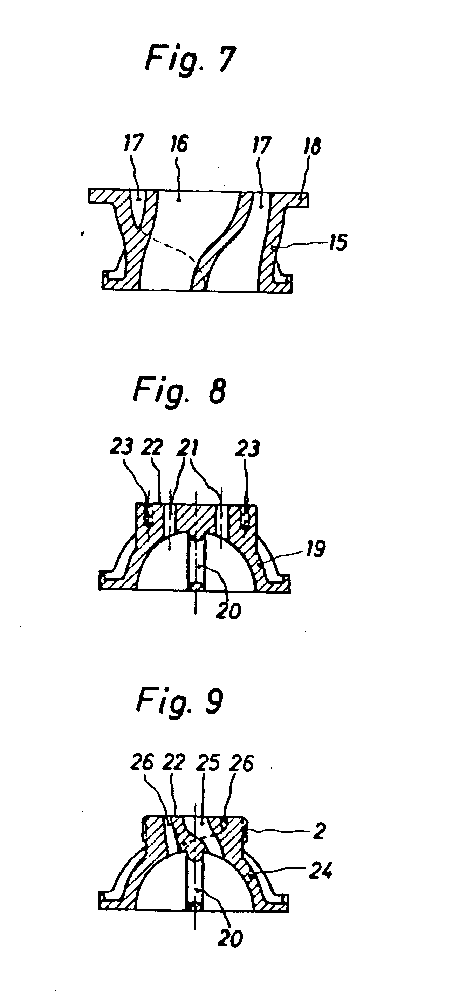

Es kann auch ein Anschlußstück 15 (Fig. 7) mit zwei konzentrischen Ausgangsmündungen (Kanäle 16, 17) vorgesehen werden, es dient der Umwandlung der parallelen Anordnung der Mündungen 7 in eine konzentrische Anordnung, wie sie für den Anschluß an bekannte Dosiergeräte erforderlich ist. Die eine der Mündungen 7 ist mit dem zentralen Kanal 16 und die andere mit dem ringförmig ausmündenden Kanal 17 verbunden. Die Ausgänge der Kanäle 16, 17 liegen in einem Flansch 18, der analog zum Flansch 4 ausgebildet sein kann mit dem Unterschied, daß die Kanalausgänge hier konzentrisch sind.

Ein weiteres Anschlußstück kann als Kappe 19 (Fig. 8) ausgebildet sein und eine mittlere Querschnittsverengung 20 sowie Durchgänge 21 in Form von Bohrungen aufweisen, die in einen Flansch 22 münden, der Sackbohrungen 23 oder ein äußeres Anschlußgewinde 2 für den Anschluß eines Gerätes im Nebenstrom aufweist. Die Ausgangsmündungen der Durchgänge 21 sind vorzugsweise in Strömungsrichtung hintereinander angeordnet.

Ähnlich ist ein weiteres Anschlußstück als Kappe 24 (Fig. 9) ausgebildet mit dem Unterschied, daß hier konzentrische Durchgänge 25 und 26 in einem Anschlußstutzen mit äußeren Anschlußgewinde 2 vorgesehen sind.

Die beiden letzten Ausführungsformen dienen dem Anschluß von Dosiergeräten, die im Nebenstrom anzuschließen sind.

Der erfindungsgemäße Anschlußblock eröffnet eine Anzahl von Anschlußmöglichkeiten sowie die vorsorgliche Anordnung von Anschlußmöglichkeiten für einen späteren Ausbau der Anlage ohne Inkaufnahme eines nennenswerten Druckabfalls.

PATENTANWÄLTE
ZELLENTIN
ZWEIBRÜCKENSTR. 15
8000 MÜNCHEN 2

Joh.A. Benckiser Wassertechnik GmbH.       9. Januar 1981
6905 Schriesheim                           RZ/Hu
                                           Eu 8029

Patentansprüche:

1. Anschlußblock für Wasserleitungen, zum Herstellen von Anschlüssen, bestehend aus einem in die Leitung einsetzbaren Rohrabschnitt mit seitlichem Flansch (4) und darin angeordneten getrennten Mündungen (7) der anschließenden Leitungsabschnitte,
dadurch gekennzeichnet,
daß die Leitungsabschnitte als Kanäle (3) bogenförmig herausgeführt und in Strömungsrichtung hintereinander angeordnet sind und über ihr Länge eine gleichgroße Querschnittsfläche aufweisen.

2. Anschlußblock nach Anspruch 1, dadurch gekennzeichnet, daß die Mündungen (7) der Kanäle (3) etwa halbkreisförmig sind und einander zu einem durch eine Trennwand (5) getrennten Kreis ergänzen.

3. Anschlußblock nach Anspruch 1 oder 2, dadurch gekennzeichnet, daß es mit einem Anschlußstück (10, 11, 13, 15, 19, 24) verbunden ist.

4. Anschlußblock nach Anspruch 3, dadurch gekennzeichnet, daß das Anschlußstück eine Abdeckkappe (10) zur Strömungsumlenkung ist.

5. Anschlußblock nach Anspruch 4, dadurch gekennzeichnet, daß die Abdeckkappe (10) etwa halbkugelförmig ausgebildet ist.

6. Anschlußblock nach Anspruch 3, dadurch gekennzeichnet, daß das Anschlußstück (11) zwei Anschlußstutzen (12) aufweist, deren Eingänge gegenüber den Mündungen (7) der Kanäle (3) des Anschlußblocks (1) angeordnet sind.

7. Anschlußblock nach Anspruch 3, dadurch gekennzeichnet, daß das Anschlußstück als Anschlußkappe (13) mit einem Anschlußstutzen (14) ausgebildet ist.

8. Anschlußblock nach Anspruch 3, dadurch gekennzeichnet, daß das Anschlußstück (15) konzentrische Ausgangsmündungen aufweist.

9. Anschlußblock nach Anspruch 3, dadurch gekennzeichnet, daß das Anschlußstück als Kappe (19, 24) ausgebildet ist und im Bereich der Trennwand (5) der Mündungen (7) des Anschlußblocks (1) eine Querschnittsverengung (20) und beiderseits der Querschnittsverengung (20) Durchgänge (21, 25, 26) für einen Nebenschluß vorgesehen sind.

10. Anschlußblock nach Anspruch 9, dadurch gekennzeichnet, daß die Ausgangsmündungen der Durchgänge (21) in Strömungsrichtung hintereinander angeordnet sind.

11. Anschlußblock nach Anspruch 9, dadurch gekennzeichnet, daß die Ausgangsmündungen der Durchgänge (25, 26) konzentrisch ausgebildet sind.

## Fig. 1

## Fig. 2

## Fig. 3

## Fig. 4

10

## Fig. 5

2  6a  2
12  12
11
9  9a
3  3
6

## Fig. 6

14
2
13

## Fig. 7

## Fig. 8

## Fig. 9